# EUROPÄISCHE PATENTSCHRIFT

(11) **EP 2 888 067 B1**
(45) Veröffentlichungstag und Bekanntmachung des Hinweises auf die Patenterteilung: **09.01.2019**
(21) Anmeldenummer: 13753091.1
(22) Anmeldetag: 14.08.2013
(51) Int. Cl.: B23K 3/02, B23K 3/08, B23Q 17/24, B25B 23/18, F21V 33/00, F21L 4/00

(54) **HANDWERKZEUG, INSBESONDERE LÖTKOLBEN, MIT LEUCHTEN**
HAND TOOL, IN PARTICULAR A SOLDERING GUN, WITH LIGHTS
OUTIL À MAIN, NOTAMMENT FER À SOUDER, COMPORTANT DES ÉLÉMENTS D'ÉCLAIRAGE

(30) Priorität: 21.08.2012 DE 202012007997 U
(43) Veröffentlichungstag der Anmeldung: 01.07.2015
(73) Patentinhaber: Apex Brands, Inc., Apex, NC 27539 (US)
(72) Erfinder: MITTMANN, Gert, 74219 Möckmühl (DE)
(74) Vertreter: Grünecker Patent- und Rechtsanwälte PartG mbB
(86) Internationale Anmeldenummer: PCT/EP2013/002440
(87) Internationale Veröffentlichungsnummer: WO 2014/029475

(56) Entgegenhaltungen:
- WO-A1-2011/040890
- CN-U- 201 519 823
- CN-Y- 200 984 676
- DE-U1-202004 008 391
- DE-U1-202008 003 787
- JP-A- 2008 087 111
- JP-U- S59 100 574
- US-A1- 2011 188 232

## Beschreibung

Die Erfindung betrifft ein Handwerkzeug, insbesondere Lötkolben gemäß dem Oberbegriff des Anspruchs 1 (siehe, z.B., CN 200 984 676 Y).

Bei verschiedenen Einsätzen des Handwerkzeugs besteht die Möglichkeit, dass nicht ausreichend Licht zur Beleuchtung eines Einsatzortes des Handwerkzeugs vorhanden ist. Dies kann beispielsweise dadurch erfolgen, dass der Werker sich zwischen Einsatzort und Umgebungslicht befindet und so den Einsatzort gegenüber dem Umgebungslicht abschattet. Bisher bestand die Möglichkeit, dass der Werker zusätzlich zum Handwerkzeug beispielsweise eine Lichtquelle in einer Hand oder an entsprechender Stelle seines Körpers, beispielsweise an einem Helm oder dergleichen, einsetzt.

Allerdings, ist bei einer separaten Handhabung der Lichtquelle nur noch eine Hand zur Handhabung des Handwerkzeugs einsetzbar. Befindet sich die Lichtquelle beispielsweise an einem Helm, ist durch entsprechendes Schwenken oder Anordnen des Kopfes nicht immer sichergestellt, dass tatsächlich der Einsatzort beleuchtet wird.

Der Erfindung liegt daher die Aufgabe zugrunde, ein Handwerkzeug dahingehend zu verbessern, dass ohne Beeinträchtigung des Werkers und damit seiner Handhabung des Handwerkzeugs eine ausreichende Beleuchtung des Einsatzortes in einfacher Weise und kostengünstig sicher möglich ist.

Das Handwerkzeug gemäß der Erfindung ist im Anspruch 1 definiert. Erfindungsgemäß weist das Handwerkzeug mehr als eine Leuchte zur Beleuchtung des Einsatzortes auf. D. h., die entsprechenden Leuchten sind Teil des Handwerkzeugs und werden mit diesem bewegt. Durch die entsprechende Ausrichtung der Leuchten ist in diesem Zusammenhang sichergestellt, dass unabhängig von der Ausrichtung des Handwerkzeugs der entsprechende Einsatzort und damit im Wesentlichen der Betätigungsendabschnitt des Handwerkzeugs schattenfrei beleuchtet wird.

Eine separate Lichtquelle ist nicht notwendig. Die entsprechende Beleuchtung erfolgt ebenfalls unabhängig von entsprechenden Bewegungen des Werkers, zum Beispiel mit dem Kopf, da die Beleuchtung direkt vom Handwerkzeug und ausgerichtet auf den Einsatzort erfolgt.

Um zu verhindern, dass gegebenenfalls die Leuchten bei Anordnung am Werkzeugelement oder am Befestigungsendabschnitt die Sicht des Werkers beeinträchtigt, können die Leuchten am Handgriff angeordnet sein.

Um in diesem Zusammenhang den Handgriff durch die Anordnung der Leuchten so gering wie möglich zu ändern, können die Leuchten an einem das Werkzeugelement zumindest teilweise umrandenden Endflansch des Handgriffs angeordnet sein. Durch diese Anordnung sind die Leuchten möglichst nah zum Werkzeugelement und damit zum Betätigungsendabschnitt angeordnet.

Der entsprechende Endflansch bildet normalerweise einen Übergang vom Handgriff zum Werkzeugelement, wobei in diesem Zusammenhang die Möglichkeit besteht, dass beispielsweise das Werkzeugelement zusammen mit dem Betätigungsendabschnitt ein austauschbares Teil ist. Diese Austauschbarkeit ist unabhängig von den Leuchten realisiert, da die Leuchten am Handgriff angeordnet ist.

Der Handgriff beziehungsweise der Handgriffendflansch können eine entsprechende Handgriffendfläche aufweisen, wobei es zur Ausrichtung der Leuchten in diesem Zusammenhang als günstig angesehen werden kann, wenn die Leuchten in dieser vom Handgriff im Wesentlichen in Richtung Einsatzort weisenden Handgriffsendfläche angeordnet sind.

Der Abstand zwischen Handgriff und Einsatzort beträgt bei den meisten Handwerkzeugen nur einige Zentimeter, d. h., der entsprechende Abstand liegt in der Regel im Bereich von 5 bis 25 cm. Bei diesem Abstand und zur ausreichenden Beleuchtung des Einsatzortes ist ein geringer Abstrahlwinkel der Leuchte in der Regel von Vorteil. D. h., ein Abstrahlwinkel jeder Leuchte kann zwischen 5 und 30° und vorzugsweise zwischen 8 und 20° betragen. Auf diese Weise erfolgt eine spot-förmige Beleuchtung, ohne dass ein unnötige Beleuchtung von relativ weit zum Einsatzort beabstandeten Bereichen erfolgt.

Um eine Leuchte mit geringem Stromverbrauch und geringer Hitzeentwicklung zu ermöglichen, kann jede Leuchte als Leuchtmittel zumindest eine LED aufweisen. Es besteht ebenfalls die Möglichkeit, dass eine solche Leuchte zwei, drei oder mehr LEDs aufweist.

Weiterhin ist es denkbar, dass die Leuchten insbesondere gleich beabstandet in Umfangsrichtung um das Werkzeugelement angeordnet sind. Jede dieser Leuchten kann eine oder eine entsprechende Anzahl von LEDs aufweisen. Ebenfalls denkbar ist, dass nur eine Leuchte vorgesehen ist, die allerdings mehrere LEDs umfasst und sich beispielsweise teilweise oder auch vollständig um das Werkzeugelement herum am Handgriff erstreckt. In diesem Fall würde man eine kreisringförmige Leuchte einsetzen.

Um zu verhindern, dass bei Handhabung des Handwerkzeugs eine Beschädigung der Leuchte erfolgt, kann die Leuchte in einer entsprechenden Oberfläche des Handgriffs versenkt angeordnet sein. Diese Oberfläche ist beispielsweise die vorangehend genannte Handgriffendfläche.

Für unterschiedliche Leuchtmittel sind unterschiedliche Lichtfarben möglich. Bei Verwendung mit dem Handwerkzeug wird es in der Regel von Vorteil sein, wenn das Leuchtmittel mit im Wesentlichen weißer Lichtfarbe ausstrahlt. Eine solche weiße Lichtfarbe kann allerdings unterschiedliche Weißtönungen aufweisen, wie Warmweiß, Tageslichtweiß, oder Neutralweiß. Diesen entsprechenden Weißtönungen sind in der Regel durch die Farbtemperatur bestimmt.

Es ist ebenfalls möglich, dass je nach Einsatzort und Umgebungslicht das Leuchtmittel auch mit anderen Lichtfarben ausstrahlt, wie beispielsweise rotes Licht, grünes Licht, blaues Licht oder dergleichen. Es ist ebenfalls denkbar, dass je nach Einsatzort die Lichtfarbe der Leuchte geändert wird, indem diese beispielsweise mehrere und unterschiedlich farbige LEDs aufweist.

Aus Herstellungs- und Reparaturgründen kann es weiterhin als günstig angesehen werden, wenn alle Leuchten gleichartig aufgebaut und im Handwerkzeug eingebaut sind. Dadurch werden die Herstellungskosten verringert und gleichzeitig ist eine Wartung oder ein Ersetzen einer entsprechenden Leuchte einfacher möglich.

In diesem Zusammenhang besteht außerdem die Möglichkeit, dass die entsprechende Leuchte austauschbar eingebaut ist. D. h., jede Leuchte kann bei Beschädigung oder Ausfall durch eine andere entsprechende Leucht ersetzt werden.

Durch die Mehrzahl der Leuchten und deren entsprechenden Anordnung wird insbesondere verhindert, dass ein Schatten im Bereich des Einsatzortes auftritt. Die entsprechende gleichmäßige Ausleuchtung des Einsatzortes kann dadurch gegebenenfalls noch verbessert werden, wenn die Leuchten in gleichem radialen Abstand zum Werkzeugelement angeordnet sind. D. h., die Leuchten können nicht nur gleich beabstandet in Umfangsrichtung, sondern auch gleich beabstandet zum Werkzeugelement angeordnet sein.

Bevorzugt ist das Handwerkzeug ein insbesondere elektrischer Lötkolben mit auswechselbarer Lötspitze als Befestigungsendabschnitt am Ende einer Spitzenhülse oder Spitzenhalterung als Werkzeugelement.

In diesem Zusammenhang sei außerdem darauf hingewiesen, dass auch insgesamt die Spitzenhülse oder Spitzenhalterung zusammen mit Lötspitze als austauschbares Teil ausgebildet sein kann. Weiterhin ist denkbar, dass die Leuchte in einem lösbaren Endabschnitt des Handgriffs angeordnet ist, sodass gegebenenfalls dieser lösbare Endabschnitt zusammen mit Spitzenhülse/Spitzenhalterung und Lötspitze ein austauschbares Teil des Handwerkzeugs ist. Der entsprechende Endabschnitt des Handgriffs kann zur Handhabung und zum Halten von Spitzenhülse mit Lötspitze verwendet werden, sodass ein direkter Kontakt des Werkers mit gegebenenfalls noch heißer Spitzenhülse oder heißer Lötspitze vermieden wird. Dadurch ist durch Anfassen des Endabschnitts ein einfaches Austauschen, beispielsweise der Lötspitze zusammen mit Spitzenhülse/Spitzenhalterung möglich.

Außerdem erfolgt dadurch auch ein Austauschen der Leuchte oder der Leuchten zusammen mit dem entsprechenden Endabschnitt.

Um die Beleuchtung mittels der entsprechenden Leuchte weiterhin beeinflussen zu können, kann jede Leuchte eine insbesondere den Abstrahlwinkel bestimmende beziehungsweise beeinflussende Abdeckung aufweisen. D. h., die Abdeckung kann beispielsweise eine Blendenwirkung aufweisen, die eine Ausstrahlung von Licht in unerwünschte Richtungen verhindert. Außerdem kann die Abdeckung eine fokussierende Wirkung aufweisen, um beispielsweise von der Leuchte abgegebenes Licht auf einen bestimmten Bereich um den Einsatzort oder nahe zum Einsatzort zu bündeln.

Im Folgenden werden vorteilhafte Ausführungsbeispiele der Erfindung anhand der in der Zeichnung beigefügten Figuren näher erläutert und beschrieben.

Es zeigen:
- Figur 1: eine perspektivische Draufsicht auf einen Lötkolben als erfindungsgemäßes Handwerkzeug und
- Figur 2: eine Seitenansicht auf einen Teil des Lötkolbens nach Figur 1.

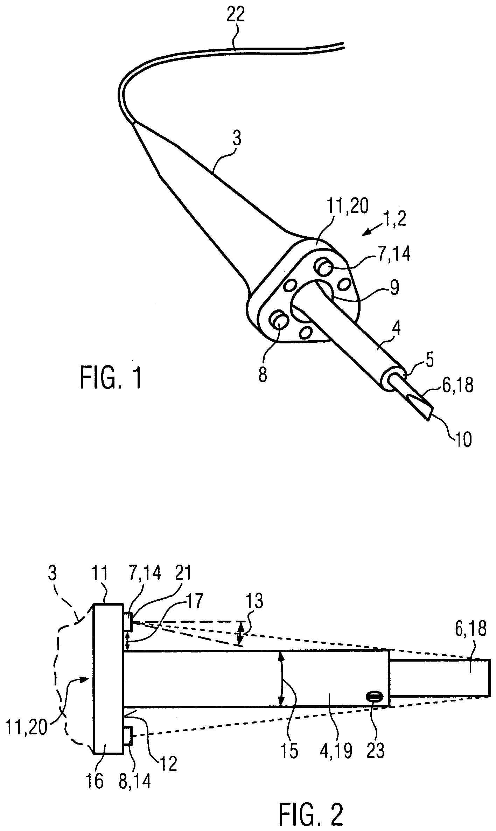

In Figur 1 ist eine perspektivische Ansicht eines Ausführungsbeispiels eines erfindungsgemäßen Handwerkzeugs 1 dargestellt. Dieses ist als elektrischer Lötkolben 2 mit Handgriff 3, Spitzenhülse oder Spitzenhalterung 19 als Werkzeugelement 4 und Lötspitze 18 als Betätigungsendabschnitt 6 ausgebildet. Der Handgriff 3 ist gemäß der Erfindung in Richtung eines elektrischen Anschlusskabels 22 konisch zulaufend ausgebildet. An seiner dem Werkzeugelement 4 zuweisenden Seite weist der Handgriff 3 einen Handgriffendflansch 11 auf, siehe auch Figur 2. Vom Handgriff 3 beziehungsweise dessen Handgriffendflansch 11 steht das Werkzeugelement 4 vor. Mit dem am freien Ende 5 des Werkzeugelements 4 angeordneten Betätigungsendabschnitt 6 ist das Handwerkzeug bei Verwendung durch einen Werker an einem entsprechenden Einsatzort 10 anordbar. Bei den dargestellten Ausführungsbeispielen ist der Einsatzort 10 beispielsweise eine Lötstelle.

Die Lötspitze 18 ist ein austauschbares Teil, siehe auch Figur 2, wobei sie mittels einer Schraube 23 oder dergleichen in der entsprechenden Position fixiert ist.

Zur Beleuchtung des Einsatzortes 10 unabhängig von separaten Leuchten oder dergleichen weist das Handwerkzeug 1 drei Leuchten 7, 8 und 9 auf. Diese sind gleich beabstandet in Umfangsrichtung 15 und ebenfalls gleich beabstandet in radialer Richtung vom Werkzeugelement 4, siehe Bezugszeichen 17 in Figur 2, in einer Handgriffendfläche 12 angeordnet. Diese Handgriffendfläche 12 ist in den Figuren 1 und 2 die Endfläche des Handgriffendflansches 11. Die entsprechenden Leuchten 7, 8, 9 sind gemäß der Erfindung teilweise versenkt in dieser Handgriffendfläche angeordnet. Jede der Leuchten weist zumindest ein Leuchtmittel 14 in Form einer LED auf. Die Leuchtmittel können die gleiche Lichtfarbe aufweisen. Es ist ebenfalls denkbar, dass jede Leuchte mehrere Leuchtmittel gegebenenfalls auch in unterschiedlichen Leuchtfarben verwendet.

Jede der Leuchten 7, 8, 9 weist einen bestimmten Abstrahlwinkel 13 auf, siehe Figur 2. Dieser ist relativ klein, um eine spot-förmige Beleuchtung zu ermöglichen. In der Regel beträgt der Abstrahlwinkel 13 zwischen 5 und 30° und vorzugsweise zwischen 8 und 20°.

Durch die entsprechende Anordnung der Leuchten 7, 8, 9 wird ein Schatten im Bereich des Einsatzortes 10 vermieden. Es besteht ebenfalls die Möglichkeit, dass zumindest eine Leuchte oder auch mehrere der Leuchten 7, 8, 9 an anderer Stelle in einer Oberfläche 16 des Handgriffs 3 angeordnet und dort insbesondere versenkt sind.

Der Handgriffendflansch 11 bildet einen Endabschnitt 20 des Handgriffs 3, der gegebenenfalls lösbar am Rest des Handgriffs 3 anordbar ist. Die Befestigung des Endabschnitts 20 am übrigen Handgriff kann beispielsweise mittels Schrauben 23 oder dergleichen erfolgen.

Jede der Leuchten 7, 8 und 9 weist eine Abdeckung 21 auf, die den Abstrahlwinkel jeder Leuchte bestimmt oder zumindest beeinflusst. Dies kann durch eine Blendenwirkung, eine fokussierende Wirkung oder dergleichen der entsprechenden Abdeckung erfolgen.

Zum Austausch von der Spitzenhülse/Spitzenhalterung 19 mit Lötspitze 18 und auch zum Austausch der Leuchten 7, 8, 9 kann der gesamte Teil nach Figur 2 als Austauschmodul ausgebildet sein. D. h., dass beispielsweise für einen anderen Lötfall und zur Verwendung einer anderen Lötspitze der Teil nach Figur 2 vom Lötkolben 2 entfernt und durch einen anderen entsprechenden Teil ersetzt wird. Die Handhabung des Teils kann mittels des Endabschnitts 20 erfolgen, sodass ein Kontaktieren der gegebenenfalls noch heißen Lötspitze oder Spitzenhülse durch einen Werker vermieden wird.

Allerdings kann auch nur die Lötspitze 18, siehe die entsprechende Schraube 23 in Figur 2, ausgetauscht werden.

Erfindungsgemäß erfolgt eine Beleuchtung des Einsatzortes des Lötkolbens 2 ohne Beeinträchtigung des Werkers. So ist es erfindungsgemäß nicht notwendig, dass der Werker eine separate Lichtquelle mit sich führt. Selbst wenn eine solche Lichtquelle nicht in einer Hand des Werkers gehalten werden muss, sondern an entsprechender Stelle seines Körpers befestigt ist, ist die entsprechende Leuchte weit beabstandet zum Einsatzort angeordnet und für eine Ausrichtung zum Einsatzort muss durch den Werker gesorgt werden. Durch die Anordnung der Leuchten in der vorangehend beschriebenen Weise erfolgt eine in jedem Fall ausreichende und zielgenaue Beleuchtung des Einsatzortes ohne zusätzlichen Eingriff des Werkes.

## Patentansprüche

1. Handwerkzeug (1), insbesondere Lotkolben (2), mit zumindest einem Handgriff (3) und einem von diesem vorstehenden Werkzeugelement (4) mit einem Betätigungsendabschnitt (6) am freien Ende (5),
wobei das Handwerkzeug (1) mehr als eine Leuchte (7, 8, 9) zur Beleuchtung eines Einsatzortes (10) des Handwerkzeugs (1) aufweist und
**dadurch gekennzeichnet, dass**
die Leuchten (7, 8, 9) an einem das Werkzeugelement umrandenden Endflansch (11) in einer sich radial zum Werkzeugelement (4) erstreckenden und in Richtung Einsatzort weisenden Handgriffendfläche (12) des Handgriffs (3) in einer Dreiecksanordnung und mit einer Ausrichtung zur schattenfreien Beleuchtung des Einsatzortes angeordnet sind, wobei der Handgriff (3) vom Endflansch (11) in Richtung eines elektrischen Anschlusskabels (22) konisch zulaufend ausgebildet ist und die Leuchten (7, 8, 9) in einer Oberfläche (16) der flachen Handgriffendfläche (12) teilweise versenkt angeordnet sind.

2. Handwerkzeug nach Anspruch 1, wobei die Leuchten (7, 8, 9) einen Abstrahlwinkel (13) von 5 bis 30° und vorzugsweise von 8 bis 20 ° aufweisen.

3. Handwerkzeug nach Anspruch 1 oder 2, wobei die Leuchten (7, 8, 9) als Leuchtmittel (14) zumindest eine LED aufweisen.

4. Handwerkzeug nach einem der vorangehenden Ansprüche, wobei die Leuchten (7, 8, 9) insbesondere gleich beabstandet in Umfangsrichtung (15) um das Werkzeugelement (4) angeordnet sind.

5. Handwerkzeug nach einem der vorangehenden Ansprüche, wobei das Leuchtmittel (14) eine im Wesentlichen weiße Lichtfarbe ausstrahlt.

6. Handwerkzeug nach einem der vorangehenden Ansprüche, wobei die Leuchten (7, 8, 9) gleichartig aufgebaut und eingebaut sind.

7. Handwerkzeug nach einem der vorangehenden Ansprüche, wobei die Leuchten (7, 8, 9) austauschbar eingebaut sind.

8. Handwerkzeug nach einem der vorangehenden Ansprüche, wobei die Leuchten (7, 8, 9) in gleichem radialen Abstand (17) zum Werkzeugelement (4) angeordnet sind.

9. Handwerkzeug nach einem der vorangehenden Ansprüche, wobei das Handwerkzeug (1) ein insbesondere elektrischer Lötkolben (2) mit auswechselbarer Lötspitze (18) als Betätigungsendabschnitt (6) am Ende einer Spitzenhülse (19) als Werkzeugelement (4) ist.

10. Handwerkzeug nach einem der vorangehenden Ansprüche, wobei die Leuchten (7, 8, 9) in einem lösbaren Endabschnitt (20) des Handgriffs (3) angeordnet sind.

11. Handwerkzeug nach einem der vorangehenden Ansprüche, wobei jede Leuchte (7, 8, 9) ein insbesondere den Abstrahlwinkel (13) bestimmende Abdeckung (21) aufweist.

12. Handwerkzeug nach einem der vorangehenden Ansprüche, wobei die Leuchten in Bezug auf den Einsatzort ein schattenfreies Licht abgeben.

## Claims

1. A hand tool (1), in particular a soldering gun (2), having at least one handle (3) and a tool element (4) protruding therefrom with an actuating end section (6) on the free end (5),
wherein the hand tool (1) has more than one light (7, 8, 9) for illuminating a place of use (10) of the hand tool (1),
**characterized in that**
the lights (7, 8, 9) are arranged on an end flange (11) surrounding the tool element, in a handle end face (12) of the handle (3) extending radially relative to the tool element (4) and oriented in the direction of the place of use, in a triangular arrangement and with an orientation for the shadow-free illumination of the place of use, wherein the handle (3) is configured to be conically tapering from the end flange (11) in the direction of an electrical connection cable (22) and the lights (7, 8, 9) are arranged partly countersunk in a surface (16) of the flat handle end face (12).

2. The hand tool according to claim 1, wherein the lights (7, 8, 9) have a radiation angle (13) of 5° to 30° and preferably of 8° to 20°.

3. The hand tool according to claim 1 or 2, wherein the lights (7, 8, 9) comprise at least one LED as lamp (14).

4. The hand tool according to any one of the preceding claims, wherein the lights (7, 8, 9) are arranged particularly equally spaced-apart in circumferential direction (15) around the tool element (4).

5. The hand tool according to any one of the preceding claims, wherein the lamp (14) emits a substantially white light color.

6. The hand tool according to any one of the preceding claims, wherein the lights (7, 8, 9) are built up and installed in a similar way.

7. The hand tool according to any one of the preceding claims, wherein the lights (7, 8, 9) are exchangeably installed.

8. The hand tool according to any one of the preceding claims, wherein the lights (7, 8, 9) are arranged at the same radial distance (17) from the tool element (4).

9. The hand tool according to any one of the preceding claims, wherein the hand tool (1) is a particularly electric soldering gun (2) with an exchangeable soldering tip (18) as the actuating end section (6) on the end of a tip sleeve (19) as the tool element (4).

10. The hand tool according to any one of the preceding claims, wherein the lights (7, 8, 9) are arranged in a detachable end section (20) of the handle (3).

11. The hand tool according to any one of the preceding claims, wherein each light (7, 8, 9) has a cover (31) which particularly determines the radiation angle (13).

12. The hand tool according to any one of the preceding claims, wherein the lights emit a shadow-free light in relation to the place of use.

## Revendications

1. Outil à main (1), notamment fer à braser (2) appelé communément fer à souder, comprenant au moins une poignée (3) et un élément d'outil (4), qui en fait saillie et comporte un tronçon terminal d'actionnement (6), à l'extrémité libre (5),
l'outil à main (1) présentent plus d'une seule lampe (7, 8, 9) pour éclairer un lieu d'utilisation (10) de l'outil à main (1), et étant
**caractérisé**
**en ce que** les lampes (7, 8, 9) sont agencées sur un flasque terminal (11) entourant l'élément d'outil, dans une surface terminale de poignée (12) de la poignée (3), qui s'étend radialement par rapport à l'élément d'outil (4) et est dirigée en direction du lieu d'utilisation, les lampes étant placées selon un agencement triangulaire et avec une orientation assurant un éclairage exempt d'ombre du lieu d'utilisation, la poignée (3) se rétrécissant selon une configuration conique, à partir du flasque terminal (11) en direction d'un câble de raccordement électrique (22), et les lampes (7, 8, 9) étant agencées en étant encastrées partiellement dans une surface (16) de la surface terminale de poignée (12) plate.

2. Outil à main selon la revendication 1, dans lequel les lampes (7, 8, 9) présentent un angle de rayonnement (13) de 5 à 30° et de préférence de 8 à 20°.

3. Outil à main selon la revendication 1 ou la revendication 2, dans lequel les lampes (7, 8, 9) comportent, en guise de moyen d'éclairage (14), au moins une diode électroluminescente dite LED.

4. Outil à main selon l'une des revendications précédentes, dans lequel les lampes (7, 8, 9) sont agencées autour de l'élément d'outil (4) en étant notamment espacées de manière égale dans la direction périphérique (15).

5. Outil à main selon l'une des revendications précédentes, dans lequel le moyen d'éclairage (14) rayonne une couleur de lumière sensiblement blanche.

6. Outil à main selon l'une des revendications précédentes, dans lequel les lampes (7, 8, 9) sont d'un mode de construction et d'une implantation identique.

7. Outil à main selon l'une des revendications précédentes, dans lequel les lampes (7, 8, 9) sont implantées de manière à pouvoir être remplacées.

8. Outil à main selon l'une des revendications précédentes, dans lequel les lampes (7, 8, 9) sont agencées à une même distance radiale (17) de l'élément d'outil (4).

9. Outil à main selon l'une des revendications précédentes, l'outil à main (1) étant un fer à braser (2) appelé communément fer à souder, notamment électrique, avec une panne de brasage (18) interchangeable en tant que tronçon terminal d'actionnement (6), à l'extrémité d'une douille d'accueil de pointe de panne (19) en tant qu'élément d'outil (4).

10. Outil à main selon l'une des revendications précédentes, dans lequel les lampes (7, 8, 9) sont agencées dans un tronçon terminal amovible (20) de la poignée (3).

11. Outil à main selon l'une des revendications précédentes, dans lequel chaque lampe (7, 8, 9) comporte un élément de recouvrement (21) déterminant notamment l'angle de rayonnement (13).

12. Outil à main selon l'une des revendications précédentes, dans lequel les lampes délivrent une lumière exempte d'ombre au niveau du lieu d'utilisation.
